# EUROPEAN PATENT SPECIFICATION

(11) **EP 4 213 608 B1**
(45) Date of publication and mention of the grant of the patent: **08.01.2025**
(21) Application number: 21778434.7
(22) Date of filing: 17.09.2021
(51) Int. Cl.: A01B 79/00, A01C 21/00, A01M 7/00

(54) **COMPUTER-IMPLEMENTED METHOD FOR PROVIDING AT LEAST ONE MIGRATION RISK INDEX**
COMPUTERIMPLEMENTIERTES VERFAHREN ZUR BEREITSTELLUNG MINDESTENS EINES MIGRATIONSRISIKOINDEX
PROCÉDÉ MIS EN OEUVRE PAR ORDINATEUR PERMETTANT DE FOURNIR AU MOINS UN INDICE DE RISQUE DE MIGRATION

(30) Priority: 17.09.2020 EP 20196649
(43) Date of publication of application: 26.07.2023
(73) Proprietor: BASF SE, 67056 Ludwigshafen am Rhein (DE)
(72) Inventor: HAERING, Tim, 67117 Limburgerhof (DE); MERTENS, Dietrich, 50678 Köln (DE)
(74) Representative: BASF IP Association
(86) International application number: PCT/EP2021/075682
(87) International publication number: WO 2022/058535

(56) References cited:
- WO-A1-2017/147682
- US-A1- 2006 074 560
- US-A1- 2020 068 797
- US-B1- 10 607 171

## Description

### TECHNICAL FIELD

The present disclosure relates to a computer-implemented method for providing at least one migration risk index, a use of such migration risk indexes for generating a migration risk map of a field, a use of such migration risk indexes for providing control data for controlling an agricultural equipment, a system for providing at least such one migration risk index, a computer-implemented method for providing such a migration risk map of a field, an agricultural equipment and a computer program element.

### TECHNICAL BACKGROUND

In agriculture, some products are used which, if possible, should not reach the groundwater layer, or only in the smallest possible quantities. For example, pesticides are used to protect plants from pests, e.g. aphids, wherein it is preferred and sometimes required that such pesticides or degradation products (e.g. non-relevant Metabolites) do not reach the groundwater layer. This also applies, for example, to liquid manure, nitrates, herbicides, fungicides, fertilizers. It was found that there is a need to provide means by which, for example, a farmer who applies such products to a field can prevent these degradation products from entering a deeper layer of soil or groundwater.

A computer-implemented method for generating prescriptions for spatial distribution of fertilizer product, comprising the steps of providing soil and weather data for a location, is known from document WO 2017/147682 A1.

### SUMMARY OF THE INVENTION

It is therefore an object of the present invention to provide means by which, for example, a farmer who applies such products to a field can prevent these degradation products from entering a deeper layer of soil or groundwater.

These and other objects, which become apparent upon reading the following description, are solved by the subject matter of the independent claims. The dependent claims refer to preferred embodiments of the invention.

According to a first aspect of the present disclosure, a computer-implemented method for providing at least one migration risk index is provided, comprising the following steps: providing soil data for a location, comprising at least information on the soil composition at that location; providing historical weather data for said location; providing a soil mobility model for a product, wherein the soil mobility model is configured to calculate migration data of the product at said location depending on the soil data and the weather data; and determining at least one migration risk index based on the migration data and being representative of a risk that said product migrates down to a lower soil layer at said location.

The term migration risk index is defined in the present case as a variable, comprising at least two stages, preferably more. The stages indicate risk levels for a product to reach a lower soil layer and/or the ground water, such as high risk, moderate risk, low risk, no risk etc. The respective risk levels may comprise numbers, letters or phrases. The term soil data is understood broadly in the present case and may comprise all data which relates to soil properties relevant for solute transport, such as texture, particle size distribution, organic carbon content, density, soil type, soil layer height, number of layers, etc. The term soil composition comprises the different contents of soil types, stones, or other materials, spatial distribution of the contents etc. The term location is also understood broadly in present case and comprises areas of any size and shapes and height profiles. The location may be part of an agricultural field or the entire agricultural field. The term weather data is understood broadly in the present case and comprises daily precipitation amounts, precipitation timings, air temperatures, evapotranspiration, wind flows, sun radiation, gradients and timings and durations of the before mentioned parameters etc. The term weather data may comprise historical, current and future weather data. However, it is preferred that the weather data only comprise historical weather data. The term historical weather data is to be understood broadly in the present case and comprises weather data from the past. Preferably the term historical weather data comprises in the present case daily weather data form the last one weeks, last two weeks, last month, from the last 3 months, from the last 6 months, from the last season and/or from the last year. The soil mobility model describes the fate and behavior of a product in soil such as degradation, sorption, and leaching based on soil and weather data of its location. The soil mobility model may be an equation based model. The soil mobility model may be based on physical equations, statistical equations derived from experiments, or neuronal networks. The term product is understood broadly in the present case and comprises all kinds of products which should not migrate into deeper soil layers and/or into the ground water, like plant treatment agents, such as pesticides, fertilizers, fungicides etc. (e.g. Metazachlor, Bentazon, and Imazamox). The term migration data is understood broadly in the present case and comprises mobility data of the product in soil, such as soil mobility, penetration depth and propagation spread. Preferably, the risk comprises that product migrates down to the ground water and leaches the ground water. The present disclosure is based on the finding that products which were applied on a location of an agricultural field may leach into the ground water and contaminate the ground water. However, these products are necessary to protect the plants and/or increase the yield of the plants. Hence, it is advantageous for a farmer to know a risk for applying a product on the location of the agricultural field. The risk or probability of a product leaching into the groundwater depends on the interactions of the product, the soil of the location and the weather conditions. The interactions depend on product properties such as density, viscosity, degradation characteristics etc., and soil properties such as soil texture, organic carbon content etc., and weather conditions, such as temperature, precipitation values etc. The present disclosure provides a soil mobility model, which describes the interactions and provides a migration risk index for the product. It should be noticed in this content that for every product a separate soil mobility model may be provided. The migration risk index may guide the farmer whether and/or how to apply the product on the location of the agricultural field (e.g. application choice yes/no, application rates, application timings). The migration risk index may advantageously simplify the treatment of plants on the location of the agricultural field. The migration risk index may advantageously increase the yield of the plants. The migration risk index may advantageously protect the ground water before contaminating with products.

In one embodiment, the migration data comprises at least soil mobility/velocity data of the product. The term soil mobility describes the velocity of the propagation of a product in a soil. The soil mobility/velocity may be used in combination with a soil height to determine the necessary time of the product to transmit the soil height before leaching into the ground water. The soil mobility may then serve to determine the migration risk index. The soil mobility may advantageously contribute to a precise determination of the migration risk index and therefor to increase a yield of the plant in conjunction with an increased protection of the ground water.

In one embodiment, the soil mobility model is based on physical-chemical interaction of the product with the soil and/or degradation characteristics of the product. The physical-chemical interactions comprise flow behavior of the product in the soil, adhesion behavior of the product in the soil, diffusion behavior of the product in the soil, chemical reaction of the product with the soil etc. The physical-chemical interaction may advantageously contribute to a precise determination of the migration risk index and therefor to increase the yield of the plant in conjunction with an increased protection of the ground water. The degradation characteristic describes in the present case the degradation of the product over the time. The degradation characteristics of the product may be used in combination with the soil mobility of the product to precisely determine the migration index risk.

In one embodiment, the weather data further comprises future precipitation (i.e. precipitation levels over given period) for said location. Future precipitation values comprise time periods of hours, days or weeks, but are not limited to them. By considering future precipitation the accuracy of the soil mobility model may increase and therefor the accuracy of the determination of the migration risk index, which may increase the yield of the plant in conjunction with an increased protection of the ground water.

In one embodiment, the location is part of a field and wherein the field comprises preferably more than one location and/or the location is defined by geographic data, preferably size, shape, geographic coordinates. By dividing an agricultural field in several locations a distribution of migration risk indexes may be determined, instead of one imprecise average value. This may contribute to an increase of the yield of the plant over the field in conjunction with an increased protection of the ground water.

In one embodiment, the migration risk index comprises at least two stages (e.g. low and high risk). The migrations risk index is not limited to two stages or terms like low and high risk, also other codes like colors or values are suitable. The stages may help to simplify the interpretation of the migration risk indexes and therefor to increase the user friendliness and efficiency of the risk determination or evaluation.

In one embodiment, the method further comprises determining an application rate of the product for the location based on the migration risk index. The determining of the application rate from the migration risk index avoids difficult calculations, which normally have to be carried out by a farmer or agricultural technician. Hence, determining the application rate simplifies the difficult process and reduces errors and therefor increases the efficiency of the plant treatment, which may result in a high yield of the plant in conjunction with a high protection of the ground water.

In one embodiment, the product comprises agrochemicals, preferably pesticides, fungicides and/or fertilizers. The method can be applied on various products and therefor in different crop protection activities in the growing cycle of the plant (e.g. weed-, fungicide & insect management) Hence, all growth stages and corresponding treatment activities may be improved by the method and therefor the yield of the plant may be increased in conjunction with an increased protection of the ground water.

A further aspect of the present disclosure refers to a use of migration risk indexes determined according to a computer-implemented method for providing at least one migration risk index for generating a migration risk map of a field. A migration risk map of a field provides a distribution of the single migration risk indexes and may help to select appropriate equipment (e.g. size and accuracy of product discharge units) for a treatment of the field. The migration risk map may help for further analysis of the field (e.g. historical changes of the migration risk indexes, detection of wrong strategies over several seasons etc.).

A further aspect of the present disclosure refers to a use of migration risk indexes determined according to a computer-implemented method for providing at least one migration risk index for providing control data for controlling an agricultural equipment, wherein the agricultural equipment is preferably a sprayer vehicle. The control data may comprise geographical data of the location in the field and application rate limits of the product for the location in the field. The agricultural equipment may comprise a GPS to detect the current position and to apply the desired application rate of the product at the desired location. The control data may therefor increase the efficiency by reducing respectively optimizing the amount of products applied to the location of field and further protect the ground water.

A further aspect of the present disclosure refers to a system for providing at least one migration risk index, comprising: at least one receiving interface for receiving soil data for a location, comprising at least information on the soil composition at that location; at least one receiving interface for receiving weather data for said location, comprising at least historical precipitation data and for said location; at least one processing unit configured to execute a soil mobility model for a product, wherein said soil mobility model is configured to determine migration data of the product at said location depending on the soil data and the weather data; at least one processing unit configured to determine at least one migration risk index based on the migration data and being representative of a risk that said product migrates down to a lower soil layer.

The system may be a CPU of a control of an agricultural equipment (e.g. spraying unit), a desktop computer, a smart phone, a tablet, or a virtual machine stored in a cloud application.

The system may be used from a farmer and may guide him to increase the yield of plants in conjunction with an increased protection of the ground water. The system may advantageously increase efficiency of applying products on agricultural fields. This may be advantageous to reduce risk for groundwater leaching and hence, ensuring stewardship and a sustainable crop protection application.

A further aspect of the present disclosure refers to a computer-implemented method for providing a migration risk map of a field, comprising the steps: determining migration risk indexes for locations of a field according to a computer-implemented method for providing at least one migration risk index; generating a migration risk map based on the determined migration risk indexes. In this context the computer-implemented method preferably comprises determining an application rate of said product for the locations of the field; and generating an application rate map of said product for the field based on the determined application rates. The migration risk map and application rate map may help to increase the yield of the plant in conjunction with an increased protection of the ground water. This may further increase sustainability and environmental stewardship.

A further aspect of the present disclosure refers to an agricultural equipment configured to be controlled by control data generated based on a migration risk map provided as explained above. The control data may serve in combination with a GPS of an agricultural equipment to dispense the product very precisely and therefor to increase the yield of the plant and to increase the protection of the ground water. This may further increase sustainability and environmental stewardship.

A further aspect relates to a method for applying a product onto an agricultural field, comprising the following steps: providing control data generated based on a migration risk map provided by a method as explained above; applying a product onto the field by means of an agricultural equipment controlled by the control data.

A further aspect of the present disclosure refers to a computer-program element which when executed by a processor is configured to carry out the method for providing a migration risk map of a field for providing a migration risk map of a field. The computer program element might therefore be stored on a computing unit, which might also be part of an embodiment. This computing unit may be configured to perform or induce performing of the steps of the method described above. Moreover, it may be configured to operate the components of the above described system. The computing unit can be configured to operate automatically and/or to execute the orders of a user. A computer program may be loaded into a working memory of a data processor. The data processor may thus be equipped to carry out the method according to one of the preceding embodiments. This exemplary embodiment of the present disclosure covers both, a computer program that right from the beginning uses the present disclosure and computer program that by means of an update turns an existing program into a program that uses the present disclosure. Moreover, the computer program element might be able to provide all necessary steps to fulfill the procedure of an exemplary embodiment of the method as described above. According to a further exemplary embodiment of the present disclosure, a computer readable medium, such as a CD-ROM, USB stick or the like, is presented wherein the computer readable medium has a computer program element stored on it which computer program element is described by the preceding section. A computer program may be stored and/or distributed on a suitable medium, such as an optical storage medium or a solid state medium supplied together with or as part of other hardware, but may also be distributed in other forms, such as via the internet or other wired or wireless telecommunication systems. However, the computer program may also be presented over a network like the World Wide Web and can be downloaded into the working memory of a data processor from such a network. According to a further exemplary embodiment of the present disclosure, a medium for making a computer program element available for downloading is provided, which computer program element is arranged to perform a method according to one of the previously described embodiments of the present disclosure.

### BRIEF DESCRIPTION OF THE DRAWINGS

In the following, the present disclosure is described exemplarily with reference to the enclosed figure, in which
Figure 1 is a schematic overview of the steps of a method according to the present disclosure; and
Figure 2 is a schematic view of a sprayer which may be used as agricultural equipment according to the present disclosure.

### DETAILED DESCRIPTION OF EMBODIMENT

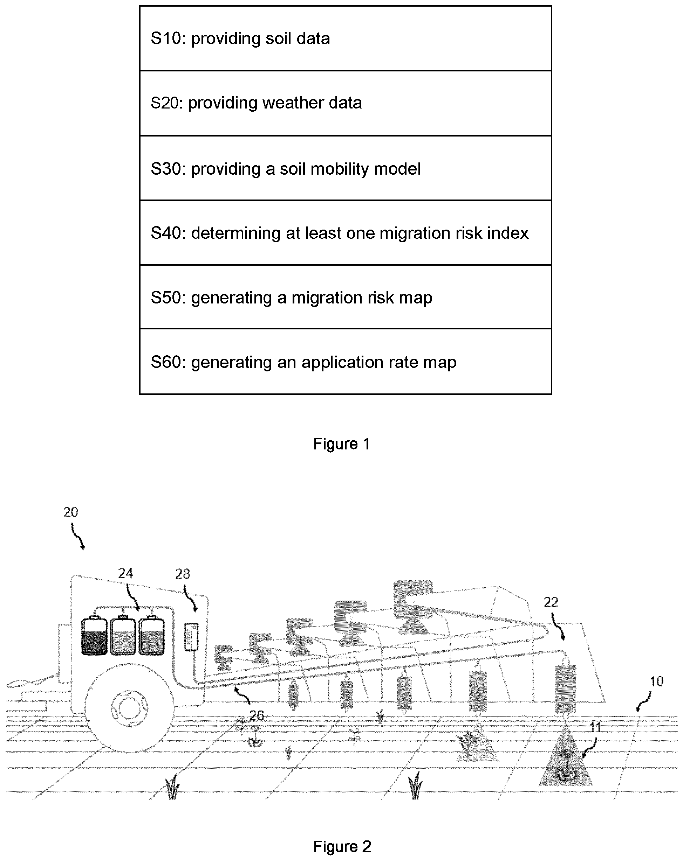

Figure 1 is a schematic view of a method according to the present disclosure. In the following, an exemplary order of the steps according to the present disclosure is explained. However, the provided order is not mandatory, i.e. all or several steps may be performed in a different order or simultaneously.

The method described below can be summarized as follows. In a first step soil data for a field are provided. In a next step weather data for the field are provided. In a further step a soil mobility model for a product (e.g. a special herbicide), which shall be applied to the field is provided and wherein the soil mobility model is used to determine migration data of the product (e.g. soil mobility of the product in the soil) based on the soil data and the weather data. In a further step a migration risk index is determined based on the migration data. In a further step a migration risk map is generated based on the determined migration risk indexes. In a further step an application rate map is generated.

In a step S10, soil data for one or more locations of a field are provided. The soil data may comprise all data which relates to a soil, such as density, soil composition, soil type, soil layer height, number of layers, roughness, diffusion coefficients, humidity, stone content, adhesions forces, humidity storage capacity etc. The soil composition may comprise the different contents of soil types, stones, or other materials, spatial distribution of the contents etc. The soil data may be provided from a data base (e.g. data base of ministry of agriculture) or may be provided from the farmer.

In a step S20, weather data for the field are provided. Weather data may comprise precipitation values, durations, timings, temperatures, wind flows, sun radiation values and durations and timings etc. The weather data may comprise historical, current and/or future weather data.

However, it is preferred that the weather data only comprise historical weather data. The weather data may be provided from a commercial weather data base, national weather services or research institutes.

In a step S30, a soil mobility model for a product is provided. The soil mobility model calculates migration data of the product at said location depending on the soil data and the weather data. It receives the soil data and the weather data as input and determines an output, i.e. the migration data. The migration data comprises soil mobility and propagation distances of the product in the soil.

In a step S40 a migration risk index of the product for each location of the field is determined.

The migration risk index is based on the migration data and provides a representative risk or probability that said product migrates down to a lower soil layer at said location. To determine the risk or probability for example soil mobility and soil layer height (i.e. distance to transmit in order to reach the ground water) are compared with the degradation time of the product. If the time for transmitting of the soil height is longer than the degradation time of the product, the risk is low otherwise high. Of course there are plenty of parameters which effect the soil mobility and propagation distances of a product and for that reason it should be clear that the above example serves merely for an improved understanding. The migration risk index of a product for a location of a field is an evaluation of the migration data in comparison with circumstances of the location of the field (i.e. soil data and weather data), which comprises interactions to each other.

In a step S50 a migration risk map of the field is generated. The migration risk map comprises the single migration risk index of the location shows a distribution of the migration risk index over the field. The migration risk map may be provided to a farmer as a basis for further analysis of field in combination with the product or in comparison with other products. The migration risk map may also be further processed to determine control data for agricultural equipment (e.g. a smart sprayer), wherein the control data may comprise limits of the application rates of said product.

In a step S60 an application rate map is generated. The application rate map comprises limits of the product and further required amounts of the product for the locations of the field. The application rate map serves as control input for agricultural equipment (e.g. a smart sprayer).

The smart sprayer may have different spray units, wherein different the spray units are independently controlled and apply different rates of the product on the locations of the field based on the current position and the application rate map. The application rate may be determined based on required amounts of the product (i.e. desired application rate), limits due to migration risk index and safety values. Safety values are in the present case distances of the application rate from the limits in order to reduce the risk of a product leaching in the ground water. The application rate map may also serve as analysis basis for the farmer and be displayed for example on a screen of an agricultural vehicle.

Figure 2 is a schematic view of a sprayer 20 which may be used as agricultural equipment according to the present disclosure.

Figure 2 shows a tractor with the sprayer 20 for applying a pesticide such as a herbicide, a fungicide or an insecticide on a field 10 with plants 11. The sprayer 20 may be releasably attached or directly mounted to the tractor. The sprayer 20 comprises a boom with multiple nozzles 22 arranged along the boom of the sprayer 20. The nozzles 22 may be arranged fixed or movable along the boom in regular or irregular intervals. Each nozzle 22 includes a controllable valve to regulate fluid release from the nozzles 22 to the field.

One or more tank(s) 24 are in fluid connection with the nozzles 22 through pipes 26. Each tank 24 holds one or more component(s) of the fluid mixture to be distributed on the field 10. This may include chemically active or inactive components like a herbicide mixture, components of a herbicide mixture, a selective herbicide for specific weeds, a fungicide, a fungicide mixture, a fungicide and plant growth regulator mixture, a plant growth regulator, water, oil, or the like.

Each tank 24 may further comprise a controllable valve to regulate fluid release from the tank 24 to the pipes 26. Such arrangement allows to control the mixture released to the field. A control 28 of the sprayer 20 controls the tank and/or nozzle valves 22 based on the application rate map and/or migration risk map.

The present disclosure has been described in conjunction with a preferred embodiment as examples as well. However, other variations can be understood and effected by those persons skilled in the art and practicing the claimed invention, from the studies of the drawings, this disclosure and the claims. Notably, in particular the steps S10 to S60 can be performed in any order, i.e. the present invention is not limited to a specific order of these steps. Moreover, it is also not required that the different steps are performed at a certain place or at one place, i.e. each of the steps may be performed at a different place using different equipment/data processing units. In the claims as well as in the description the word "comprising" does not exclude other elements or steps and the indefinite article "a" or "an" does not exclude a plurality.

A single element or other unit may fulfill the functions of several entities or items recited in the claims. The mere fact that certain measures are recited in the mutual different dependent claims does not indicate that a combination of these measures cannot be used in an advantageous implementation.

### Reference signs

- S10: providing soil data
- S20: providing weather data
- S30: providing a soil mobility model
- S40: determining at least one migration risk index
- S50: generating a migration risk map
- S60: generating an application rate map
- 10: field
- 11: plant
- 20: sprayer
- 22: nozzle
- 24: tank
- 26: pipe
- 28: control

## Claims

1. A computer-implemented method for providing at least one migration risk index, comprising the steps:
providing soil data for a location, comprising at least information on the soil composition at that location (S10);
providing weather data for said location, comprising at least historical precipitation data for said location (S20);
providing a soil mobility model for a product, wherein the soil mobility model is configured to calculate migration data of the product at said location depending on the soil data and the weather data (S30); and
determining at least one migration risk index based on the migration data and being representative of a risk that said product migrates down to a lower soil layer at said location (S40).

2. The method according to claim 1, wherein the migration data comprises at least soil mobility data of the product.

3. The method according to claim 1 or claim 2, wherein the soil mobility model is based on physical-chemical interaction of the product with the soil and/or degradation characteristics of the product.

4. The method according to any of the preceding claims, wherein the weather data further comprises future precipitation (i.e. precipitation levels over given period) for said location.

5. The method according to any of the preceding claims, wherein the location is part of a field and wherein the field comprises preferably more than one location and/or the location is defined by geographic data, preferably size, shape, geographic coordinates.

6. The method according to any of the preceding claims, wherein the migration risk index comprises at least two stages, which at least two stages may be low or high risk.

7. The method according to any of the preceding claims, further comprising:
determining an application rate of the product for the location based on the migration risk index.

8. The method according to any of the preceding claims, wherein the product comprises agrochemicals, preferably pesticides, fungicides, and/or fertilizers.

9. Use of migration risk indexes determined according to a method according to any one of the preceding claims for generating a migration risk map of a field.

10. Use of migration risk indexes determined according to a method according to any one of the preceding claims for providing control data for controlling an agricultural equipment, wherein the agricultural equipment is preferably a sprayer vehicle.

11. A system for providing at least one migration risk index, comprising:
at least one receiving interface for receiving soil data for a location, comprising at least information on the soil composition at that location;
at least one receiving interface for receiving weather data for said location, comprising at least historical precipitation data for said location;
at least one processing unit configured to execute a soil mobility model for a product, wherein said soil mobility model is configured to determine migration data of the product at said location depending on the soil data and the weather data;
at least one processing unit configured to determine at least one migration risk index based on the migration data and being representative of a risk that said product migrates down to a lower soil layer.

12. Computer-implemented method for providing a migration risk map of a field, comprising the steps:
determining migration risk indexes for locations of a field according to a method according to any one of claims 1 to 8;
generating a migration risk map based on the determined migration risk indexes (S50).

13. The method according claim 12, further comprising:
determining an application rate of said product for the locations of the field; and
generating an application rate map of said product for the field based on the determined application rates (S60).

14. A computer program element which when executed by a processor is configured to carry out the method according claim 12 or claim 13 in a system according to claim 11.

15. Method for applying a product onto an agricultural field, comprising the following steps:
providing control data generated based on a migration risk map provided by a method according to claim 12 or claim 13;
applying a product onto the field by means of an agricultural equipment controlled by the control data.

## Patentansprüche

1. Computerimplementiertes Verfahren zur Bereitstellung wenigstens eines Migrationsrisikoindexes, welches die folgenden Schritte umfasst:
Bereitstellen von Bodendaten für einen Ort, die wenigstens Informationen über die Bodenzusammensetzung an diesem Ort umfassen (S10);
Bereitstellen von Wetterdaten für den betreffenden Ort, die wenigstens historische Niederschlagsdaten für den Ort umfassen (S20);
Bereitstellen eines Bodenbewegungsmodells für ein Produkt, wobei das Bodenbewegungsmodell so konfiguriert ist, dass es Migrationsdaten des Produkts an dem betreffenden Ort in Abhängigkeit von den Bodendaten und den Wetterdaten berechnet (S30); und
Bestimmen wenigstens eines Migrationsrisikoindexes, der auf den Migrationsdaten basiert und repräsentativ für das Risiko ist, dass das Produkt an dem Ort in eine tiefere Bodenschicht wandert (S40).

2. Verfahren gemäß Anspruch 1, wobei die Migrationsdaten wenigstens Bodenbewegungsdaten des Produkts umfassen.

3. Verfahren gemäß Anspruch 1 oder Anspruch 2, wobei das Bodenbewegungsmodell auf der physikalisch-chemischen Wechselwirkung des Produkts mit dem Boden und/oder auf den Abbaubarkeitsmerkmalen des Produkts basiert.

4. Verfahren gemäß einem der vorstehenden Ansprüche, wobei die Wetterdaten ferner zukünftige Niederschläge (d.h. Niederschlagsmengen über einen bestimmten Zeitraum) für den betreffenden Ort umfassen.

5. Verfahren gemäß einem der vorstehenden Ansprüche, wobei der Ort Teil eines Feldes ist und wobei das Feld vorzugsweise mehr als einen Ort umfasst und/oder der Ort durch geografische Daten, vorzugsweise Größe, Form, geografische Koordinaten, definiert ist.

6. Verfahren gemäß einem der vorstehenden Ansprüche, wobei der Migrationsrisikoindex wenigstens zwei Stufen umfasst, wobei die wenigstens zwei Stufen ein geringes oder ein hohes Risiko sein können.

7. Verfahren gemäß einem der vorstehenden Ansprüche, ferner umfassend:
Bestimmen einer Aufwandmenge des Produkts für den Ort basierend auf dem Migrationsrisikoindex.

8. Verfahren gemäß einem der vorstehenden Ansprüche, wobei das Produkt Agrochemikalien, vorzugsweise Pestizide, Fungizide und/oder Düngemittel umfasst.

9. Verwenden von Migrationsrisikoindizes, die nach einem Verfahren gemäß einem der vorstehenden Ansprüche bestimmt wurden, zum Erzeugen einer Migrationsrisikokarte eines Feldes.

10. Verwenden von Migrationsrisikoindizes, die nach einem Verfahren gemäß einem der vorstehenden Ansprüche bestimmt wurden, zum Bereitstellen von Steuerdaten zum Steuern einer landwirtschaftlichen Einrichtung, wobei die landwirtschaftliche Einrichtung vorzugsweise ein Sprühfahrzeug ist.

11. System zur Bereitstellung wenigstens eines Migrationsrisikoindexes, umfassend:
wenigstens eine Empfangsschnittstelle zum Empfangen von Bodendaten für einen Ort, die wenigstens Informationen über die Bodenzusammensetzung an dem betreffenden Ort umfassen;
wenigstens eine Empfangsschnittstelle zum Empfangen von Wetterdaten für den betreffenden Ort, die wenigstens historische Niederschlagsdaten für den Ort umfassen;
wenigstens eine Verarbeitungseinheit, die so konfiguriert ist, dass sie ein Bodenbewegungsmodell für ein Produkt ausführt, wobei das Bodenbewegungsmodell so konfiguriert ist, dass es Migrationsdaten des Produkts an dem Ort in Abhängigkeit von den Bodendaten und den Wetterdaten bestimmt;
wenigstens eine Verarbeitungseinheit, die so konfiguriert ist, dass sie wenigstens einen Migrationsrisikoindex bestimmt, der auf den Migrationsdaten basiert und repräsentativ für das Risiko ist, dass das Produkt in eine tiefere Bodenschicht wandert.

12. Computerimplementiertes Verfahren zur Bereitstellung einer Migrationsrisikokarte eines Feldes, das die folgenden Schritte umfasst:
Bestimmen von Migrationsrisikoindizes für Orte eines Feldes nach einem Verfahren gemäß einem der Ansprüche 1 bis 8;
Erzeugen einer Migrationsrisikokarte basierend auf den bestimmten Migrationsrisikoindizes (S50).

13. Verfahren gemäß Anspruch 12, ferner umfassend:
Bestimmen einer Aufwandmenge des Produkts für die Orte des Feldes; und
Erzeugen einer Aufwandmengenkarte des Produkts für das Feld basierend auf den bestimmten Aufwandmengen (S60).

14. Computerprogrammelement, das, wenn es von einem Prozessor ausgeführt wird, so konfiguriert ist, dass es das Verfahren gemäß Anspruch 12 oder Anspruch 13 in einem System gemäß Anspruch 11 ausführt.

15. Verfahren zum Ausbringen eines Produkts auf ein landwirtschaftliches Feld, das die folgenden Schritte umfasst:
Bereitstellen von Steuerdaten, die basierend auf einer durch ein Verfahren gemäß Anspruch 12 oder Anspruch 13 bereitgestellten Migrationsrisikokarte erzeugt wurden;
Ausbringen eines Produkts auf das Feld mit Hilfe einer landwirtschaftlichen Einrichtung, das durch die Steuerdaten gesteuert wird.

## Revendications

1. Procédé mis en œuvre par ordinateur pour fournir au moins un indice de risque de migration, comprenant les étapes suivantes :
la fourniture de données de sol pour un emplacement, comprenant au moins des informations sur la composition du sol à cet emplacement (S10) ;
la fourniture de données météorologiques pour ledit emplacement, comprenant au moins des données historiques de précipitations pour ledit emplacement (S20) ;
la fourniture d'un modèle de mobilité du sol pour un produit, le modèle de mobilité du sol étant configuré pour calculer des données de migration du produit audit emplacement en fonction des données de sol et des données météorologiques (S30) ; et
la détermination d'au moins un indice de risque de migration sur la base des données de migration et représentatif d'un risque que ledit produit migre vers une couche de sol inférieure audit emplacement (S40).

2. Procédé selon la revendication 1, les données de migration comprenant au moins des données de mobilité du sol du produit.

3. Procédé selon la revendication 1 ou la revendication 2, le modèle de mobilité du sol étant basé sur l'interaction physico-chimique du produit avec le sol et/ou les caractéristiques de dégradation du produit.

4. Procédé selon l'une quelconque des revendications précédentes, les données météorologiques comprenant en outre les précipitations futures (c'est-à-dire les niveaux de précipitations sur une période donnée) pour ledit emplacement.

5. Procédé selon l'une quelconque des revendications précédentes, l'emplacement faisant partie d'un champ et le champ comprenant plus préférablement plus d'un emplacement et/ou l'emplacement étant défini par des données géographiques, de préférence la taille, la forme, les coordonnées géographiques.

6. Procédé selon l'une quelconque des revendications précédentes, l'indice de risque de migration comprenant au moins deux étapes, les au moins deux étapes pouvant être à risque faible ou à risque élevé.

7. Procédé selon l'une quelconque des revendications précédentes, comprenant en outre :
la détermination d'un taux d'application du produit pour l'emplacement sur la base de l'indice de risque de migration.

8. Procédé selon l'une quelconque des revendications précédentes, le produit comprenant des produits agrochimiques, de préférence des pesticides, des fongicides et/ou des engrais.

9. Utilisation des indices de risque de migration déterminés conformément à un procédé selon l'une quelconque des revendications précédentes pour générer une carte de risque de migration d'un champ.

10. Utilisation d'indices de risque de migration déterminés conformément à un procédé selon l'une quelconque des revendications précédentes pour fournir des données de commande d'un équipement agricole, l'équipement agricole étant de préférence un véhicule pulvérisateur.

11. Système pour fournir au moins un indice de risque de migration, comprenant :
au moins une interface de réception pour recevoir des données de sol pour un emplacement, comprenant au moins des informations sur la composition du sol à cet emplacement ;
au moins une interface de réception pour recevoir des données météorologiques pour ledit emplacement, comprenant au moins des données historiques de précipitations pour ledit emplacement ;
au moins une unité de traitement configurée pour exécuter un modèle de mobilité du sol pour un produit, ledit modèle de mobilité du sol étant configuré pour déterminer des données de migration du produit audit emplacement en fonction des données de sol et des données météorologiques ;
au moins une unité de traitement configurée pour déterminer au moins un indice de risque de migration sur la base des données de migration et étant représentatif d'un risque que ledit produit migre vers une couche de sol inférieure.

12. Procédé mis en œuvre par ordinateur pour fournir une carte de risque de migration d'un champ, comprenant les étapes suivantes :
la détermination d'indices de risque de migration pour des emplacements d'un champ conformément à un procédé selon l'une quelconque des revendications 1 à 8 ;
la génération d'une carte de risque de migration sur la base des indices de risque de migration déterminés (S50) .

13. Procédé selon la revendication 12, comprenant en outre :
la détermination d'un taux d'application dudit produit pour les emplacements du champ ; et
la génération d'une carte de taux d'application dudit produit pour le champ sur la base des taux d'application déterminés (S60).

14. Élément de programme informatique qui, lorsqu'il est exécuté par un processeur, est configuré pour mettre en œuvre le procédé selon la revendication 12 ou la revendication 13 dans un système selon la revendication 11.

15. Procédé d'application d'un produit sur un champ agricole, comprenant les étapes suivantes :
la fourniture de données de commande générées sur la base d'une carte de risque de migration fournie par un procédé selon la revendication 12 ou la revendication 13 ;
l'application d'un produit sur le champ au moyen d'un équipement agricole commandé par les données de commande.
